(19) Europäisches Patentamt
European Patent Office
Office européen des brevets

(11) **EP 3 260 266 B1**

(12) **EUROPEAN PATENT SPECIFICATION**

(45) Date of publication and mention
of the grant of the patent:
**23.09.2020  Bulletin 2020/39**

(21) Application number: **16752196.2**

(22) Date of filing: **22.01.2016**

(51) Int Cl.:
*B29C 48/88* (2019.01)      *B29C 55/02* (2006.01)
*B29C 55/12* (2006.01)      *B29C 55/18* (2006.01)
*B29C 67/20* (2006.01)      *B29K 105/04* (2006.01)
*B29K 23/00* (2006.01)      *B29L 7/00* (2006.01)

(86) International application number:
**PCT/JP2016/051777**

(87) International publication number:
**WO 2016/132807 (25.08.2016 Gazette 2016/34)**

(54) **METHOD FOR PRODUCING MICROPOROUS PLASTIC FILM**

VERFAHREN ZUR HERSTELLUNG EINER MIKROPORÖSEN KUNSTSTOFFFOLIE

PROCÉDÉ DE PRODUCTION D'UNE FEUILLE PLASTIQUE MICROPOREUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.02.2015   JP 2015031389**

(43) Date of publication of application:
**27.12.2017   Bulletin 2017/52**

(73) Proprietor: **Toray Industries, Inc.**
**Tokyo, 103-8666 (JP)**

(72) Inventors:
• **ICHINOMIYA, Takashi**
**Otsu-shi**
**Shiga 520-8558 (JP)**

• **SUGATA, Masami**
**Tokyo 1038666 (JP)**

(74) Representative: **Mewburn Ellis LLP**
**Aurora Building**
**Counterslip**
**Bristol BS1 6BX (GB)**

(56) References cited:
EP-A1- 2 757 125      WO-A1-2010/018749
WO-A1-2010/018749    WO-A1-2010/095518
WO-A1-2013/100062    WO-A1-2015/014569
JP-A- H0 257 316      JP-A- S5 022 069
JP-A- S5 165 178      JP-A- 2009 249 480
JP-A- 2009 249 480    JP-A- 2010 160 483

## Description

Technical Field of the Invention

Our invention relates to a method for producing a microporous plastic film.

Background Art of the Invention

Microporous plastic films have been broadly used as a substance separation membrane, permselective membrane, separator material of electrochemical element such as alkali rechargeable battery, lithium rechargeable battery, fuel cell and capacitor or the like. A separator for lithium ion battery is a particularly suitable application.

Patent documents 1 and 2 disclose a wet process for producing a microporous film made of plastic like polyolefin. In the wet process, a diluent such as liquid paraffin is added to a resin, and is kneaded and dispersed, and then discharged through a die lip onto a cooling drum to be cooled and solidified to form a gel sheet, which is oriented uniaxially or biaxially by a roller method or tenter method for improving strength to produce a film having micropores by extracting the diluent.

Particularly by the roller method drawing the sheet in the travelling direction by a plurality of rollers, the lengthwise draw ratio can be changed freely by only changing a roller speed. By the other tenter method, the microporous plastic film can be improved in mechanical property because polyolefin molecules can be oriented with strong orientation in the drawing direction. As disclosed in Patent document 1, the roller method applied to the wet process might make the diluent bleed out from a gel sheet surface under a pressure caused by heat or tension while the conveying and drawing are performed in the presence of the diluent between film and roller. To draw such a gel sheet, the sheet is sufficiently cooled below the crystallization ending temperature of the resin and is heated again below the melting point as disclosed in Patent document 2 where it is heated above the crystallization dispersion temperature.

Prior art documents

Patent documents

   Patent document 1: JP2009-249480-A
   Patent document 2: JP2013-530261-A

Summary of the Invention

Problems to be solved by the Invention

The wet roller method disclosed in Patent document 1 might have a problem that the diluent intervening between the roller and film lubricates to meander or fail a desirable draw ratio because of slip.

According to Patent document 1, the above-described slip can be prevented when a tension over the lengthwise draw tension is given between the lengthwise drawing machine and the lateral drawing machine (tenter), wherein the tension should preferably be greater than the draw tension by 20%. However, we found that such a great tension over the draw tension drew the sheet downstream of the lateral drawing machine to cause an undesirable slip adversely and therefore the slip couldn't be prevented.

According to Patent document 2, a predetermined range of contact time, contact angle and contact length between the lengthwise drawing roller and the sheet can prevent the slip and the sheet surface from being damaged. However, we found even such measures couldn't fully prevent the slip when we had an increased draw speed, a decreased draw temperature or an increased draw ratio in order to improve physical properties and mechanical properties of the microporous plastic film.

Accordingly, it could be helpful to provide a method for producing a microporous plastic film excellent in physical properties and mechanical properties by a high-speed drawing without slip under a high productivity.

Means for solving the Problems

To achieve the above-described object, our method for producing a microporous plastic film comprises: kneading a diluent and a polyolefin resin with an extruder; discharging the polyolefin resin kneaded with the diluent from a die lip in a sheet shape; cooling and solidifying the sheet discharged from the die lip on a drum; reheating and drawing the solidified sheet with a plurality of rollers in a sheet conveying direction; cooling the sheet drawn in the sheet conveying direction; gripping both ends of the sheet with clips; introducing the sheet into a tenter; and washing the diluent out to prepare a uniaxially or biaxially oriented microporous plastic film, wherein the method, wherein the method further comprises pressing the sheet interposing between a nip roller having a surface coated with a rubber and a driving roller driven by a motor upstream from a roller at the most downstream side among the rollers, wherein number N of pairs of the driving roller and the nip roller satisfies the following formula:

$$N > T/(\mu \cdot P),$$

where

T [N]: drawing tension required for drawing sheet in sheet conveying direction,
$\mu$: coefficient of friction between driving roller sheet, and
P [N]: nip pressure between driving roller and nip roller.

In our methods for producing a microporous plastic film, it is preferable that 5 or more pairs of the driving roller and the nip roller are provided.

In our methods for producing a microporous plastic film, it is preferable that the driving roller has a surface made of a metal or a ceramic and has a surface roughness less than 1S.

In this specification, "nip" means to press a sheet as being interposed with rollers. "Nip roller" means one of the two rollers used to press the sheet interposing therebetween, the one being pressed onto the other one facing to the one by moving to press the sheet interposing therebetween.

Effect according to the Invention

Our invention can produce, with high productivity, a microporous plastic film having excellent physical properties and mechanical properties by preventing slip even in wet roller drawing.

Brief explanation of the drawings

[Fig. 1] Fig. 1 is a schematic side view showing a production process of our microporous plastic film.
[Fig. 2] Fig. 2 is a schematic side view showing an example of lengthwise drawing process in producing our microporous plastic film.
[Fig. 3] Fig. 3 is a schematic side view showing an example of cooling process of gelled sheet in producing our microporous plastic film.
[Fig. 4] Fig. 4 is a schematic side view showing an example of lengthwise drawing process in producing a conventional microporous plastic film.

Embodiments for carrying out the Invention

Hereinafter, desirable examples of our microporous plastic film will be explained with reference to figures.

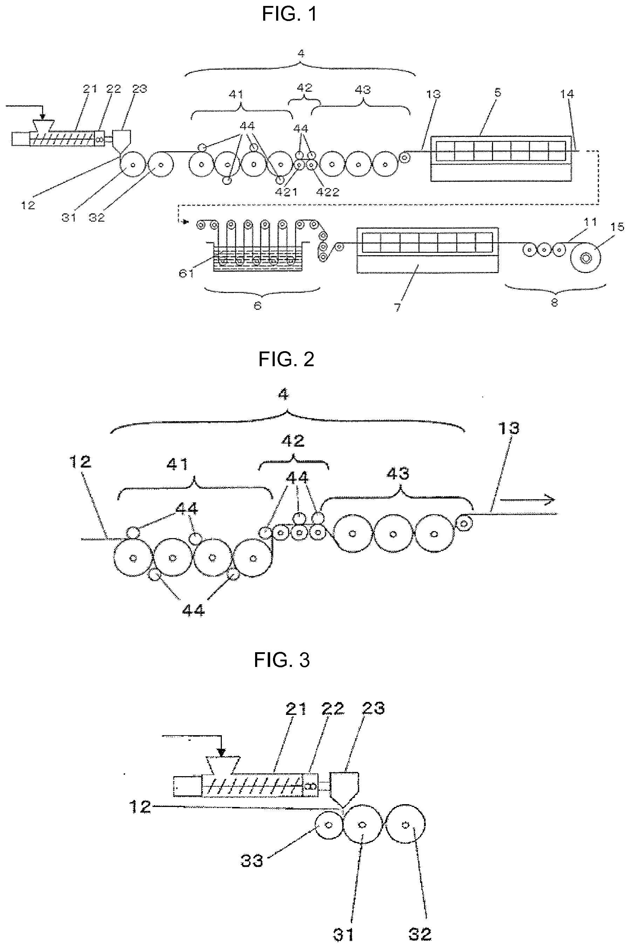

Fig. 1 is a schematic side view showing a production process of our microporous plastic film.

To desirably produce microporous plastic film 11, polyolefin resin is mixed with diluent and heated to melt to prepare polyolefin solution. The diluent decides a structure forming micropores of the microporous plastic film and contributes to improvement of drawability (for example, improvement as reduction of unevenness at a draw ratio for exhibiting a strength) at the time of drawing film.

The diluent is not limited particularly, as far as it can be mixed or dissolved with polyolefin resin. The diluent may be mixed with polyolefin in a melt-kneading state. Alternatively, it may be mixed with solid solvent at room temperature. Such prepared solid diluent may be stearyl alcohol, ceryl alcohol, paraffin wax or the like. It is preferable that the diluent is a liquid at room temperature from viewpoints of prevention of uneven drawing and coating convenience at a later stage. The liquid diluent may be a fatty series such as nonane, decane, decalin, paraxylene, undecane, dodecane and liquid paraffin; a cyclic fatty series or an aromatic hydrocarbon; a mineral oil fraction having a boiling point of the same range as the compounds thereof; or a phthalate ester, such as dibutyl phthalate and dioctylphthalate which are liquids at room temperature. To obtain a gelled sheet stably containing liquid diluent, it is preferable to employ a nonvolatile diluent such as liquid paraffin. For example, it is preferable that the liquid diluent has a viscosity of 20 to 200 cSt at 40°C.

It is preferable that the polyolefin resin of 10 to 50 mass% is mixed with the diluent in total 100 mass% of polyolefin resin and diluent, from a view point of good formability of extruded product. The polyolefin resin solution may be melt-kneaded uniformly by a calendar, mixer or extruder 21 having a screw as shown in Fig. 1.

It is preferable that the polyolefin resin solution in extruder has a predetermined temperature of which range is 140 to 250 °C for polyethylene composition and is 190 to 270 °C for polypropylene-containing composition, as depending on resin kind. A thermometer is provided inside extruder or in a cylinder section to monitor a temperature indirectly and properly adjust the heater temperature, rotation speed and discharge rate of the cylinder section to control the temperature in a target range.

The polyolefin resin solution which has been melt-kneaded by extruder 21 is discharged through a slit section of die lip 23 into a sheet while it is measured with gear pump 22 as needed. Such discharged gelled sheet 12 is solidified as contacting first cooling drum 31. Where, gelled sheet 12 becomes a pillar part with crystal structure made of the polyolefin supporting pores of microporous plastic film 11. Gelled sheet 12 becomes in a gel state since it includes the diluent melt-kneaded in extruder 21. A part of the diluent bleeds out from sheet surface by cooling gelled sheet 12 so that the sheet with wet surface made by the diluent is conveyed on first cooling drum 31.

The thickness of gelled sheet 12 can be adjusted by adjusting the cooling drum speed relative to the flow rate from the die lip slit section according to discharge rate.

It is preferable that first cooling drum 31 has a temperature of 15 to 40 °C, which may affect on the crystal structure of gelled sheet 12. It is because the final cooling temperature should be below the crystallization ending temperature. The molecular orientation tends to advance in a later drawing process when the higher-order structure is fine. To make up for cooling time, it is possible, that the diameter of first cooling drum 31 is enlarged, that second cooling drum 32 is added to first cooling drum 31 or that a plurality of cooling drums are further added. To make the crystal structure precise and uniform in gelled sheet 12, it is preferable that a parameter, such as convey speed, drum temperature, drum size and the number of drums, is designed in view of the cooling speed. For example, even when a target sheet temperature is 30°C, first cooling drum 31 may be around 20°C because too high speed might cause insufficient heat conduction. Besides, it is preferable that humidity is lowered by air conditioning when the temperature is below 25°C. First cooling drum 31 may have a shape of roller or belt. It is preferable that a surface of first cooling drum 31 is made of metal, ceramic or fiber composite material, which is excellent in shape stability and working accuracy to keep the roller speed constant. It is particularly preferable that the surface is made of a metal which is excellent in heat conduction to a film. It is possible to perform non-adhesion coating or rubber coating on it to the extent that conduction is not obstructed. It is preferable that the surface of sheet and roller are made of metal including metal plating which is excellent in scratch resistance and heat conductivity and is not swelled by the bled-out diluent making wet state on the surface.

It is preferable that cooling drums 31 and 32 are provided with a conventional heat pump or cooling device in addition to an internal flow path for refrigerant to control the surface temperature. The roller is driven to rotate by a rotation driving means such as motor at a predetermined speed while a speed-changing mechanism may be provided between rollers to apply draw tension or relaxation according to expansion and shrinkage of the sheet. Alternatively, each roller may be provided with a motor to achieve function like the speed-changing mechanism by accurately adjusting the speed by inverter or servo.

In Fig. 1, the top side of gelled sheet 12 is discharged from die lip 23 and contacts first cooling drum 31 which first contacts it, and then is rapidly cooled with refrigerant at the above-described temperature. On the other hand, the side opposite to the side contacting the above-described first cooling drum 31 is slowly cooled with air as shown in Fig. 1. Although it is not illustrated in the figures, it is preferable that the side opposite to the side contacting first cooling drum 31 is cooled by forced circulation with air nozzle or air chamber to make a rapid cooling of the opposite side. Such a configuration would be suitable to such a case that the conveying speed is high or the gelled sheet is too thick to conduct heat sufficiently to first cooling drum 31. Also, the opposite side can be improved in cooling ability by providing refrigerant-flowing nip roller 33 in which refrigerant flows inside opposite to cooling drum 31 as shown in Fig. 3.

To prevent wet gelled sheet 12 from meandering or degrading the cooling efficiency by lubrication, it is possible that the sheet is pushed onto first cooling drum 31 with a contacting means such as nip roller, jet nozzle, suction chamber and electrostatic application. Such a contacting means can improve the travelling property and cooling efficiency of gelled sheet 12 to enable easy setting of the cooling speed and the final cooling temperature.

Other than cooling drum 31, it is preferable that gelled sheet 12 is depressed with a nip roller onto second cooling drum 32 or other conveying roller to increase coefficient of friction which has been decreased on the mirror surface. It is preferable that the surface of nip roller is made of rubber-like elastic material which can depress gelled sheet 12 uniformly onto uneven thickness of gelled sheet 12, deflection of roller and slight surface unevenness. The rubber-like elastic material is preferably a general vulcanized rubber such as Nitrile isoButylene-isoprene Rubber (NBR), Chloroprene Rubber (CR), Ethylene Propylene Rubber (EPDM) and Hypalon rubber (CSM). When gelled sheet 12 or conveying roller has a high temperature like 80°C or higher, it is particularly preferable to employ the EPDM or CSM. Under a higher temperature, it is preferable to employ a silicone rubber or a fluorine rubber as well as the vulcanized rubber. It is preferable to employ a rubber which is little swelled by diluent to prevent the roller from having a distorted shape over time.

Next, gelled sheet 12 is oriented in a sheet-conveying direction with a plurality of roller groups in lengthwise drawing process 4, and then both ends of uniaxially oriented sheet 13 are gripped by a conventional clip to be oriented in a sheet width direction (direction orthogonal to the conveying direction) while the sheet is conveyed in the travelling direction while heated and kept warm in an oven. In Fig. 1, the drawing may be performed between upstream drawing roller 421 and downstream drawing roller 422 in lengthwise drawing process 4. Such a drawing process can achieve a high productivity and characteristics such as strength and air permeability of microporous film. The drawing process in the sheet-conveying direction (which may be called "lengthwise drawing") as well as driving process is performed with a roller having a metal surface and a temperature control mechanism such as conventional heater inside. To ensure the freedom of roller path, it is possible to provide an idler roller which is not driven and not shown in Fig. 1. Such an idler roller should have small bearing and inertia loss so that a small rotation power is sufficient because the coefficient of friction is small between wet film and roller, and should not be provided more than needed.

Alternatively, like cooling drum 31, it is preferable that heating roller group 41 or drawing roller group 42 has an internal structure in which the roller is provided with a flow path for heat medium such as vapor and pressured hot water. It is possible that the roller is supported as rotatable with bearings and a shaft end is connected to a heat-medium supply pipe with a rotary joint for supplying heat medium without obstructing the rotation of roller to supply heat medium to the inside.

It is preferable that the drawing is performed at a draw ratio of 5 to 12 in a sheet conveying direction although depending on the gelled sheet thickness. To improve strength and productivity, it is preferable that the drawing is performed at an area ratio of 30 or more in a sheet width direction together with the sheet conveying-directional drawing. It is preferable that the area ratio is 40 or more, preferably 60 or more.

It is preferable that a drawing temperature is a melting point of polyolefin resin or less. It is preferable that the temperature is in a range of [crystal dispersion temperature Tcd of polyolefin resin] to [melting point of polyolefin resin]. For example, it is preferable that the temperature is 80 to 130 °C for polyethylene resin, preferably 100 to 125 °C. After the drawing, a cooling process is performed down to these temperatures.

Thus performed drawing cleaves a higher order structure formed on the gelled sheet to miniaturize crystal phase and form many fibrils. The fibrils are three-dimensionally connected irregularly to form a web structure. It is suitable for a battery separator because the drawing improves mechanical strength and enlarges fine pores.

Thus obtained uniaxially oriented sheet 13 or biaxially oriented sheet 14 can be washed to remove diluent and dried up to make microporous plastic film 11 by a conventional technology as disclosed in WO2008/016174. To make microporous plastic film 11, it is possible that dry drawing process 7 is performed to reheat and redraw the sheet after washing process 6. Re-drawing process 7 may be performed with a roller or a tenter. Also, heat treatment may be performed to adjust physical properties and remove residual distortion through the process. Depending on intended purposes, it is possible that the surface of microporous plastic film 11 is subject to a surface treatment such as corona discharge or functional coating with heat-resistant particles.

In Fig. 1, included diluent bleeds out from gelled sheet 12 by being cooled on cooling drums 31 and 32. The diluent bleeds out even by stress derived from conveying tension. For the same reason, gelled sheet 12, oriented films 13 and 14 have a surface wet with diluent after being discharged from die lip 23 before the diluent is removed in washing process 6. In particular, gelled sheet 12 is heated up to the above-described drawing temperature with heating roller group 41 or the like in lengthwise drawing process 4, so that the heating accelerates the bleeding out of the diluent. Such amount of bleeding out is great at a part from cooling drum 31 to heating roller group 41 upstream of lengthwise drawing process 4. Because the diluent bleeding out drops along the roller surface in Fig. 1, it is preferable that a pan (not shown) to collect it to be discarded or reused is provided.

Although heating roller group 41 and drawing roller group 42 are common to each other in terms of heating and heat-keeping function of gelled sheet 12 and variable roller rotation speed, drawing roller group 42 comprises a roller to substantively draw gelled sheet 12 and generates a peripheral speed difference to permanently deform gelled sheet in the travelling direction. More particularly, drawing roller group 42 is defined as rollers which substantively draw it as generating 3% or more of peripheral speed difference relative to the upstream roller.

Gripping force (frictional force) is necessary between the roller and gelled sheet 12 to convey gelled sheet 12 without meandering in a travelling direction. Particularly in drawing roller group 42 where a high tension is generated by drawing, a high gripping force balancing the drawing tension is required to achieve a necessary draw ratio. The diluent having bled out as described above interposes between the roller and gelled sheet 12 in lubrication state to cause a deterioration of the gripping force required for conveyance and drawing.

When the drawing is performed between upstream drawing roller 421 and downstream drawing roller 422 in lengthwise drawing process 4, the drawing tension at the downstream side is balanced by receiving with the clip which grips the end of uniaxially oriented sheet 13 mainly in lateral drawing process 5. Although cooling roller group 43 may bear the drawing tension, it may not have a gripping force required to prevent the slip. Therefore it is preferable that the roller group doesn't receive the tension to equal the speeds of lateral drawing process 5, downstream drawing roller 422 and uniaxially oriented sheet 13. It is preferable that the drawing roller such as drawing roller 422 in Fig. 1 at the most downstream side is a cooling roller. Before the oriented sheet is fed to lateral drawing process 5, it is possible that the sheet is once cooled and conveyed to a tenter oven to make the process paper feed of uniaxially oriented sheet 13 easy while the crystal structure formed by the lengthwise drawing is solidified in a case of lateral drawing, so that a highly oriented and highly strengthened microporous plastic film can be prepared. When drawing roller 422 is also a cooling roller, it can be cooled at the same time of finishing the drawing to prevent unnecessary size distortion and tension change. From a viewpoint of purpose of our invention, cooling rollers after drawing roller 422 should have almost the same speed as tenter clip, so that the tenter clip primarily receive the downstream drawing tension to prevent slip on the cooling roller.

On the other hand, the upstream drawing tension should be received by heating roller group 41 as well as upstream drawing roller 421 so that the total force thereof balances to the drawing tension. The upstream drawing tension should be balanced to these roller gripping forces. Otherwise, because there is no speed regulation section which is nonslip like tenter clip provided at the downstream side, the tension might be transmitted to molten gel sheet 12 between die lip 23 and first cooling drum 31 to cause problems such as varying thickness.

Accordingly, our invention aims to obtain a gripping force balancing to the upstream drawing tension by pressing gelled sheet 12 interposing between a nip roller having a surface coated with rubber and a driving roller driven by a motor upstream from drawing roller 422 as the most downstream roller among drawing roller group 42 in Fig. 1.

According to the Coulomb's law, the nip pressure of nip roller generates friction force of each driving roller calculated by product $\mu_i \cdot P_i$, where $\mu_i$ is a coefficient of friction between each driving roller and sheet and $P_i$ [N] is a nip pressure of nip roller provided on each driving roller. Not to transmit the tension to gelled sheet 12 discharged from the die lip, it is possible that the total of gripping force generated by the friction force is more than drawing tension T [N]. Because the friction force is generated only as reactive force against the tension, gelled sheet 12 cannot be drawn upstream even with a force greater than the tension. This fact makes the following formula.

$$\mu 1 \cdot P 1 + \mu 2 \cdot P 2 + \ldots + \mu N \cdot P N = \Sigma \mu i \cdot P i > T$$

Where i indicates a numbering ordinal to identify each driving roller like i = 1 to N, wherein N pieces of driving rollers are necessary for the gripping. When the above-described inequality is satisfied, reactive force against the friction can be balanced to the drawing tension at the upstream side while reactive force against the friction of tenter clip can be balanced at the downstream side, so that lengthwise drawing process 4 has no slip and no trouble such as meandering and insufficient drawing.

It is possible that drawing tension T is calculated from a sheet cross-section area sampled from a stress-distortion diagram made by a tension tester capable of displacing and measuring load after heating gelled sheet 12 which has been formed and cooled to a supposed drawing temperature in advance. The tension meter can be provided at any part from drawing roller group 42 to lateral drawing process 5.

Although nip pressure $P_i$ can naturally be adjusted for each driving roller, it is conventionally known that the nip pressure is preferably 300 to 2,000 [N/m] per unit width to prevent meandering caused by excessively pressing with a pair of rollers. To calculate the number of nip rollers required for the gripping, the pressure can be assumed as constant at averaged value of pressure P. The above-described formula can be changed as follows.

$$\mu 1 \cdot P 1 + \mu 2 \cdot P 2 + \ldots + \mu N \cdot P N = \Sigma \mu i \cdot P i = P \cdot \Sigma \mu i > T$$

Of course, coefficient of friction $\mu_i$ between each driving roller and gelled sheet 12 can have different values for each sheet and driving rollers. However, the measurement cannot be performed as conveying the sheet. So, gelled sheet 12 is sampled before drawing after forming and cooling in advance, so that the measurement can be performed between gelled sheet 12 and a driving roller, plate or the like made of the same material as driving roller. The coefficient of friction may be measured by a conventional method disclosed by formula 2 and Fig. 5 of WO2012/133097 pamphlet. The measurement of coefficient of friction is performed by hanging 2kg weight on a sheet which has been cut into 100mm width and wound by contact angle of 90° on the lengthwise drawing roller (of which surface is coated with hard chrome plating at 0.4$\mu$m at the maximum height) not in operation at normal temperature of 25°C. The roller under suspension is monitored to be prevented from rotating by the suspended motor resistance in the measurement. Assuming that obtained measured value $\mu$ = constant, the formula becomes as follows.

$$P \cdot \Sigma \mu i = P \cdot \mu \cdot N > T$$

Therefore if number N of pairs of driving roller and nip roller, or the number of nip rollers is as follows, the gripping force at the upstream side to balance to the drawing tension can be ensured while lengthwise drawing process 4 under lubrication with diluent is prevented from having slip and meandering.

$$N > T/(\mu \cdot P)$$

For example, when the measured value range of $\mu$ is represented by the lower limit, N should be greater to increase the safety grade against slip but facility cost increases. When the range of $\mu$ is represented by the upper limit, N can be smaller to reduce facility cost but the slip might be caused by slight change of $\mu$ or increase of tension.

We found it is possible that a polyethylene-based microporous plastic film is formed at a drawing tension per unit width T of 1000 to 4000N/m and a coefficient of friction $\mu$ around 0.05 to 0.4.

From a viewpoint of facility cost saving, when nip pressure P is set to 2,000N/m which is the maximum in the desirable pressure range and when the coefficient of friction $\mu$ is set to 0.4 in a case of relatively high friction, number N of nip roller pairs required to grip relatively high drawing tension of 4,000N/m should be more than five pairs according to the following formula.

$$N > 4,000/(0.4 \times 2,000) = 5 \text{ pairs}$$

It is more preferable that nip roller number N is normally 10 pairs or more, by assuming drawing tension T of 2,000N/m, nip roller pressure of 1,000N/m and $\mu$ of around 0.2. Because too many rollers may increase facility cost, it is preferable that N is 5 to 25 pairs, preferably 10 to 20 pairs.

With such a configuration, it is possible that the gripping force is exhibited by friction force from the heating roller to the upstream drawing roller as shown in Fig. 1 to partially receive gripping force of drawing tension at the upstream side, so that gelled sheet 12 which is in a melting state between die lip 23 and first cooling drum 31 is prevented from having uneven thickness derived from the drawing tension.

It is preferable that the surface of nip roller is made of soft rubber-like elastic material which can depress gelled sheet 12 uniformly onto uneven thickness of gelled sheet 12, deflection of roller and slight surface unevenness. Because lengthwise drawing process 4 accompanies conveyance above the heat dispersion temperature in particular, the material is preferably a heat-resistant rubber such as EPDM and Hypalon rubber. It is preferably silicone rubber or fluoro-rubber. It is preferable to employ a rubber which is little swelled by diluent to prevent the roller from having a distorted shape over time.

It is possible that a nip is performed along a tangent line substantively with a nip roller to introduce gelled sheet 12 into heating roller or drawing roller as shown in Fig. 2, so that slip and meandering can be prevented as improving uniformity of thickness and appearance quality. That is because, when a nip roller is not provided along the tangent line as shown in Fig. 1, certain thickness of diluent and air is accompanied between drawing roller group 42 or heating roller group 41 and gelled sheet 12 to make a bank by nipping with nip roller 44 afterwards.

It is preferable that the roller has a surface roughness of 0.2 to 40 $\mu$m at the maximum height. To make a mirror surface, the surface roughness is preferably 0.2 to 0.8 $\mu$m. To make a sufficiently rough surface, the surface roughness is preferably 20 to 40 $\mu$m. Because the surface of the roller is wet with the diluent, the mirror surface has a low coefficient of friction caused by lubrication. The rough surface has an increased coefficient of friction caused by less or no lubrication because the diluent discharges from the unevenness. Although the mirror surface and the rough surface may be combined as needed, it is basically preferable that the mirror surface is provided from viewpoints of maintenance such as cleaning and speed control precision, preferably with a certain lubricant with diluent to prevent the sheet from having uneven appearance.

To prevent the surface of gelled sheet from being roughed by nipping when gripping force of nip roller is ensured as in our invention, it is particularly preferable that the driving roller has a mirror surface of which maximum height is 1S, or 1$\mu$m or less, preferably 0.2 to 0.8 $\mu$m. To make such a mirror surface, the nip roller surface may be made of metal or ceramic as described above.

[Examples]

Hereinafter, our invention will be explained with reference to Examples although it is not limited to these Examples in particular.

[Example 1]

A mixture is prepared by dry-blending of 0.375 parts by weight of tetrakis[methylene-3-(3,5-ditertiary buty1-4-hydroxyphenyl)-propionate] methane together with 100 parts by weight of polyethylene (PE) composition which comprises 40 mass% of ultrahigh molecular weight polyethylene having mass average molecular weight (Mw) of $2.5 \times 10^6$ and 60 mass% of high-density polyethylene having Mw of $2.8 \times 10^5$.

Thus obtained mixture is fed to twin-screw extruder 21 at flow rate of 97kg/hr by a film forming method shown in Fig. 1. Liquid paraffin as a diluent is fed to twin-screw extruder 21 at flow rate of 291kg/hr to be blended at 210°C.

Thus obtained polyethylene solution is supplied into die lip 23 as being measured by a gear pump and the polyethylene solution at 210°C is discharged on first cooling drum 31 adjusted to 35°C by waterflow to form gelled sheet 12. First cooling drum 31 is driven to rotate at 10m/min.

Gelled sheet 12 is subject to sampling with 10mm square before introduction to lengthwise drawing process 4 to find that the thickness is 1.5mm in 10 times average of contact-type thickness meter. Since bled-out diluent adheres to the surface, the above-described thickness measurement includes ±0.1mm variation at the maximum.

Gelled sheet 12 is heated to 110°C on the sheet surface with heating roller group 41 and a metal waterflow roller at the first roller of drawing roller group 42. Between heating roller group 41 and the first roller of each drawing roller group 42, the rotation speed of motor directly connected to the roller is controlled to make the downstream side faster by 1% of speed difference according to thermal expansion of the sheet. Drawing roller group 42 consists of 2 rollers shown in Fig. 1. Nip roller 44 of which surface is coated with rubber is provided onto each roller to perform lengthwise drawing by speed difference between rollers. The speed is controlled to set to 9 the total draw ratio of uniaxially oriented sheet 13 passing lengthwise drawing process 4, wherein the speed of first cooling drum 31 is set to 10m/min, speed ratio from heating roller group 41 to upstream drawing roller 421 is set to 1%, the speed of upstream drawing roller 421 is set to 10.4m/min, and the speed of drawing roller 422 is set to 10.4 x 8.66 = 90m/min.

Oriented film 13 is cooled on four rollers of cooling roller group 43 including last roller 422 of drawing roller group 42 to adjust the waterflow roller temperature to make the sheet temperature 50°C. Each clip speed difference between the last drawing roller, cooling roller group 43 and lateral drawing process is 0 to make the speed same.

From first cooling drum 31, surfaces of all rollers in lengthwise drawing process 4 are made of steel coated with hard chromic plating of which surface roughness is 10μm (10S) at the maximum height.

A preliminary sample has drawing tension T of 1,500N, nip roller pressure P of 2,000N and coefficient of friction μ of 0.15. Therefore, it becomes T/ (μ x P) = 1500/ (0.15 x 20,000) = 5. Therefore as shown in Fig. 1, number N of nip roller 44 is set to 6 (>5) at a part upstream from the drawing tension generating part between upstream drawing roller 421 and downstream drawing roller 422.

Both ends of oriented film 13 are gripped with a clip to perform lateral drawing at draw ratio of 6 times at 115°C in an oven, and then biaxially oriented film 14 cooled down to 30°C is washed in a washing bath of methylene chloride kept at 25°C to remove liquid paraffin. The washed film is dried up in a dry kiln kept at 60°C and then is drawn again in redrawing process 7 at areal ratio of 1.2 times in lengthwise and lateral directions. The heat treatment is performed for 20 seconds by 90m/min at 125°C to prepare microporous plastic film 11 having thickness of 16μm and width of 2,000mm.

[Example 2]

From first cooling drum 31, surfaces of all rollers in lengthwise drawing process 4 are made of steel coated with hard chromic plating of which surface roughness is 0.4μm (0.8S) at the maximum height. The other conditions are the same as Example 1.

[Comparative Example 1]

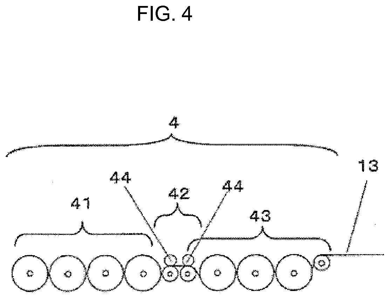

As shown in Fig. 4, a nip roller is provided only on drawing roller group 42 to perform lengthwise drawing on drawing roller group 42. The other conditions are the same as Example 1.

[Comparative Example 2]

As shown in Fig. 4, a nip roller is provided only on drawing roller group 42 to perform lengthwise drawing on drawing roller group 42. It was said that other conditions were the same as Example 2.

[Slip on drawing roller]

The speeds of sheet and roller are measured by 1% accuracy including installation accuracy with a non-contact Doppler velocimeter (made by ACT Electronics Corp., model 1522). For all Examples and Comparative Examples, slip of film 11 before drawing is evaluated according to the following standards.

No good: The speed difference between roller and sheet is 10% or more of roller rotation speed.

Acceptable: The speed difference between roller and sheet is 5% or more and less than 10% of roller rotation speed.

Good: The speed difference between roller and sheet is less than 5% of roller rotation speed.

[Meandering amount in lengthwise drawing process]

The amount of meandering in lengthwise drawing process 4 is evaluated according to the following standards.

No good: Meandering amount is 10mm or more.

Acceptable: Meandering amount is 5mm or more and less than 10mm.

Good: Meandering amount is less than 5mm.

[Physical properties and mechanical properties of microporous plastic film]

The Gurley impermeability is determined according to JIS P8117 with Oken type Impermeability Tester (made by Asahi Seiko Co., Ltd., EGO-IT). The thrust strength is determined from the maximum load applied when a needle having 1mm diameter and spherical tip (Radius of curvature R=0.5mm) is pricked at 2mm/sec into a microporous membrane having membrane thickness T1. The measured maximum load La is converted to Lb which would be the maximum load when membrane thickness is 16$\mu$m according to the following formula: Lb = (La x 16) /T1 to calculate the thrust strength [N/16$\mu$m].

Good: The Gurley impermeability is 250sec $\pm$ 20sec while the thrust strength is 6N or more.

No good: Outside the range for the above-described Good

[Appearance quality of biaxially oriented sheet 14]

The appearance quality of biaxially oriented sheet 14 is evaluated. To inspect appearance, LED light source having 150 lumen is employed. The upper surface of travelling biaxially oriented sheet 14 is inspected to evaluate the appearance quality. The LED light source is irradiated orthogonally to the sheet travelling direction from distance of 1m to the film to evaluate it according to the following standards.

No good: Appearance of biaxially oriented sheet 14 travelling at the exit of lateral drawing process 5 is visually observed to distinguish light and dark.

Acceptable: Appearance of biaxially oriented sheet 14 exited from lateral drawing process 5 is cut and visually observed in a resting state to distinguish light and dark although light and dark cannot be distinguished on the travelling biaxially oriented sheet 14.

Good: Light and dark on biaxially oriented sheet 14 cannot be distinguished even in a resting state.

[Table 1]

| | Conveyance | | | Physical properties, mechanical properties | | |
|---|---|---|---|---|---|---|
| | Slip on drawing roller | Meandering | Appearance | Thrust strength [N] | Gurley impermeability [sec] | Comprehensive evaluation of physical properties |
| Example 1 | Good | Good | Acceptable | 7 | 250 | Good |
| Example 2 | Good | Good | Good | 7 | 250 | Good |
| Comparative Example 1 | No good | Acceptable | Acceptable | 5 | 300 | No good |
| Comparative Example 2 | No good | No good | Good | 5 | 300 | No good |

By comparing Examples and Comparative Examples, it is found that all Examples set the number of nip roller pairs to obtain friction force and gripping force beyond the drawing tension continuously provide microporous plastic film 11 stably with no slip and no meandering. On the other hand, all Comparative Examples result in unacceptable slip and meandering. Accordingly, Comparative Examples don't achieve target physical properties and mechanical properties for microporous plastic film.

In comparison with Example 2, appearance quality is relatively poor in Example 1 because lubrication amount of diluent is less and dirt tends to deposit on irregularity of rough surface. Nevertheless travelling ability is stable as described above.

In comparison with Comparative Example 2, lubrication amount of diluent is less and meandering is less in Comparative Example 1. However, the gripping force in travelling direction is not enough to prevent meandering completely.

As described above, our invention makes it possible to provide a microporous plastic film excellent in strength and physical properties as maintaining a travelling stability in a drawing condition where the drawing is performed to give the microporous film desirable properties.

Industrial Applications of the Invention

Our microporous plastic film is applicable, but not limited in particular, to a separator used for electrochemical reaction device such as rechargeable battery, fuel cell and capacitor as well as a functional web such as filtration membrane, print film and clothing material.

Explanation of symbols

11:     microporous plastic film

12:     gelled sheet (film)

13:     uniaxially oriented sheet (film)

14:     biaxially oriented sheet (film)

15:     microporous plastic film roll

21:     extruder

22:     gear pump

23:     die lip

31:     first cooling drum

32:     second cooling drum

33:     refrigerant-flowing nip roller

4:      lengthwise drawing process

41:     heating roller group

42:     drawing roller group

421:    upstream drawing roller

422:    downstream drawing roller

43:     cooling roller group

44:     nip roller

5:      lateral drawing process

6:     washing/drying process

61:     washing solvent

7:     re-drawing heat-treatment process

8:     take-up process

## Claims

1. A method for producing a microporous plastic film (11), the method comprising:

   kneading a diluent and a polyolefin resin with an extruder (21);
   discharging the polyolefin resin kneaded with the diluent from a die lip (23) in a sheet shape;
   cooling and solidifying the sheet discharged from the die lip (23) on a drum;
   reheating and drawing the solidified sheet with a plurality of rollers in a sheet conveying direction;
   cooling the sheet drawn in the sheet conveying direction;
   gripping both ends of the sheet with clips;
   introducing the sheet into a tenter; and
   washing the diluent out to prepare a uniaxially or biaxially oriented microporous plastic film, wherein the method further comprises pressing the sheet interposing between a nip roller (44) having a surface coated with a rubber and a driving roller driven by a motor upstream from a roller at the most downstream side among the rollers, wherein
   number N of pairs of the driving roller and the nip roller (44) satisfies the following formula:

$$N > T/(\mu \cdot P),$$

   where

   T [N]: drawing tension required for drawing sheet in sheet conveying direction,
   $\mu$ : coefficient of friction between driving roller sheet, and
   P [N]: nip pressure between driving roller and nip roller (44).

2. The method for producing a microporous plastic film (11) according to claim 1, wherein 5 or more pairs of the driving roller and the nip roller (44) are provided.

3. The method for producing a microporous plastic film (11) according to claim 1 or 2, wherein the driving roller has a surface made of a metal or a ceramic and has a surface roughness less than 1S.

## Patentansprüche

1. Verfahren zur Herstellung einer mikroporösen Kunststofffolie (11), wobei das Verfahren Folgendes umfasst:

   Kneten eines Verdünnungsmittels und eines Polyolefinharzes mit einem Extruder (21);
   Ausgeben des mit dem Verdünnungsmittel verkneteten Polyolefinharzes aus einer Formtülle (23) in einer Bahnform;
   Abkühlen und Verfestigen der aus der Formtülle (23) ausgegebenen Bahn auf einer Trommel;
   erneutes Erhitzen und Ziehen der verfestigten Bahn mit einer Vielzahl von Walzen in eine Bahnbeförderungsrichtung;
   Kühlen der in die Bahnbeförderungsrichtung gezogenen Bahn;
   Fassen der beiden Enden der Bahn mit Klemmen;
   Einsetzen der Bahn in einen Spannrahmen; und
   Auswaschen des Verdünnungsmittels, um eine einachsig oder zweiachsig ausgerichtete mikroporöse Kunststofffolie zu erzeugen, wobei das Verfahren ferner Folgendes umfasst:

Pressen der Bahn zwischen einer Quetschwalze (44), die eine Oberfläche aufweist, die mit einem Gummi beschichtet ist, und einer Antriebswalze, die von einem Motor stromauf von einer Walze an der am weitesten stromab gelegenen Seite aller Walzen angetrieben wird, wobei
die Anzahl N von Paaren der Antriebswalze und der Quetschwalze (44) die folgende Formel erfüllt:

$$N > T/(\mu \bullet P),$$

worin

T[N]: Zugspannung, die zum Ziehen der Bahn in die Bahnbeförderungsrichtung erforderlich ist,
$\mu$: Reibungskoeffizient zwischen der Antriebswalze und der Bahn und
P[N]: Quetschdruck zwischen der Antriebswalze und der Quetschwalze (44).

2. Verfahren zur Herstellung einer mikroporösen Kunststofffolie (11) nach Anspruch 1, wobei 5 oder mehr Paare von der Antriebswalze und der Quetschwalze (44) bereitgestellt sind.

3. Verfahren zur Herstellung einer mikroporösen Kunststofffolie (11) nach Anspruch 1 oder 2, wobei die Antriebswalze eine Oberfläche aufweist, die aus einem Metall oder Keramikmaterial besteht und eine Oberflächenrauigkeit von weniger als 1S aufweist.

## Revendications

1. Procédé de production d'un film plastique microporeux (11), le procédé comprenant:

le malaxage d'un diluant et d'une résine de polyoléfine avec une extrudeuse (21) ;
l'évacuation de la résine de polyoléfine malaxée avec le diluant depuis une lèvre de filière (23) sous une forme de feuille ;
le refroidissement et la solidification de la feuille évacuée depuis la lèvre de filière (23) sur un cylindre ;
le réchauffage et l'étirage de la feuille solidifiée avec une pluralité de rouleaux dans une direction de transport de feuille ;
le refroidissement de la feuille étirée dans la direction de transport de feuille ;
la préhension des deux extrémités de la feuille avec des pinces ;
l'introduction de la feuille dans un tenseur ; et
le lavage du diluant pour préparer un film plastique microporeux à orientation uniaxiale ou biaxiale, le procédé comprenant en outre
le pressage de la feuille intercalée entre un rouleau pinceur (44) ayant une surface revêtue avec un caoutchouc et un rouleau d'entraînement entraîné par un moteur en amont d'un rouleau sur le côté le plus en aval parmi les rouleaux, dans lequel
le nombre N de paires du rouleau d'entraînement et du rouleau pinceur (44) satisfait à la formule suivante :

$$N > T/(\mu \cdot P),$$

où

T [N] : tension d'étirage nécessaire pour étirer la feuille dans la direction de transport de feuille,
$\mu$ : coefficient de frottement entre le rouleau d'entraînement et la feuille, et
P [N] : pression de pincement entre le rouleau d'entraînement et le rouleau pinceur (44).

2. Procédé de production d'un film plastique microporeux (11) selon la revendication 1, dans lequel 5 paires ou plus du rouleau d'entraînement et du rouleau pinceur (44) sont fournies.

3. Procédé de production d'un film plastique microporeux (11) selon la revendication 1 ou 2, dans lequel le rouleau d'entraînement a une surface constituée d'un métal ou d'une céramique et a une rugosité de surface inférieure à 1S.

EP 3 260 266 B1

## FIG. 1

## FIG. 2

## FIG. 3

FIG. 4

**EP 3 260 266 B1**

**REFERENCES CITED IN THE DESCRIPTION**

**Patent documents cited in the description**

- JP 2009249480 A
- JP 2013530261 A
- WO 2008016174 A
- WO 2012133097 A

15